# EUROPEAN PATENT APPLICATION

(11) **EP 4 307 111 A1**
(43) Date of publication of application: **17.01.2024**
(21) Application number: 23171614.3
(22) Date of filing: 04.05.2023
(51) Int. Cl.: G06F 9/30

(54) **VECTOR UNPACK BASED ON SELECTION INFORMATION**

(30) Priority: 02.07.2022 US 202217856981
(71) Applicant: Intel Corporation, Santa Clara, CA 95054 (US)
(72) Inventor: MADDURI, Venkateswara, Austin, 78733 (US); BRANDT, Jason, Austin, 78703 (US); WIEDEMEIER, Jeff, Austin, 78737 (US); ESPIG, Michael, Newberg, 97132 (US)
(74) Representative: Goddar, Heinz J.

(57) **Abstract**

Techniques for vector unpacking are described. In some examples a single instruction is executed to perform vector unpacking. In some examples the instruction is to include one or more fields for an opcode, a destination operand identifier, a first source operand identifier, a second source operand identifier, and an immediate, wherein the opcode is to indicate execution circuitry is to interleave data elements from the identified first and second source operands according to an encoding of the immediate wherein the encoding of the immediate to include multiple controls with each control dictating what is to be written into a particular data element position of the identified destination operand;

## Description

### BACKGROUND

Digital signal processing (DSP) includes a wide range of operations such as fast Fourier transforms (FFT), filtering, pattern matching, correlation, polynomial evaluation, statistical operations (mean, moving average, variance, etc.), and neural networks.

### BRIEF DESCRIPTION OF DRAWINGS

Various examples in accordance with the present disclosure will be described with reference to the drawings, in which:
FIG. 1 illustrates an example execution of a single instruction to unpack doublewords (32-bit) from quadwords (64-bit) in each of two source registers based on selection information instruction
FIGS. 2-5 illustrate sub-portions of the element selection circuitry 111 according to some examples.
FIG. 6 illustrates examples of hardware to process an instance of a DVPUNPCKDQ instruction.
FIG. 7 illustrates an example of method performed by a processor to process a DVPUNPCKDQ instruction.
FIG. 8 illustrates an example of method to process a DVPUNPCKDQ instruction using emulation or binary translation.
FIG. 9 illustrates an example of method performed by a processor to process a DVPUNPCKDQ instruction.
FIG. 10 illustrates an example of method to process a DVPUNPCKDQ instruction using emulation or binary translation.
FIG. 11 illustrates an example system.
FIG. 12 illustrates a block diagram of an example processor that may have more than one core and an integrated memory controller.
FIG. 13(A) is a block diagram illustrating both an example in-order pipeline and an example register renaming, out-of-order issue/execution pipeline according to examples.
FIG. 13(B) is a block diagram illustrating both an example of an in-order architecture core and an example register renaming, out-of-order issue/execution architecture core to be included in a processor according to examples.
FIG. 14 illustrates examples of execution unit(s) circuitry.
FIG. 15 is a block diagram of a register architecture according to some examples.
FIG. 16 illustrates examples of an instruction format.
FIG. 17 illustrates examples of an addressing field.
FIG. 18 illustrates examples of a first prefix.
FIGS. 19(A)-(D) illustrate examples of how the R, X, and B fields of the first prefix in FIG. 18 are used.
FIGS. 20(A)-(B) illustrate examples of a second prefix.
FIG. 21 illustrates examples of a third prefix.
FIG. 22 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media to support a single instruction to unpack doublewords (32-bit) from quadwords (64-bit) in each of two source registers based on selection information (referred to herein as a DVPUNPCKDQ instruction). As a DVPUNPCKDQ instruction has not previously existed, there is no generic decoder or execution circuitry configured to handle this in instruction. As such, there is no generic computer that can process such an instruction and support for this instruction is an improvement to a computer itself. In some examples, at least some of the circuits described herein are a part of a DSP processor.

In some examples, the DVPUNPCKDQ instruction is a part of digital signal processing (DSP) instruction set architecture. In some examples, applications for sensor, audio, classification tasks for computer vision, speech recognition utilize the DVPUNPCKDQ instruction.

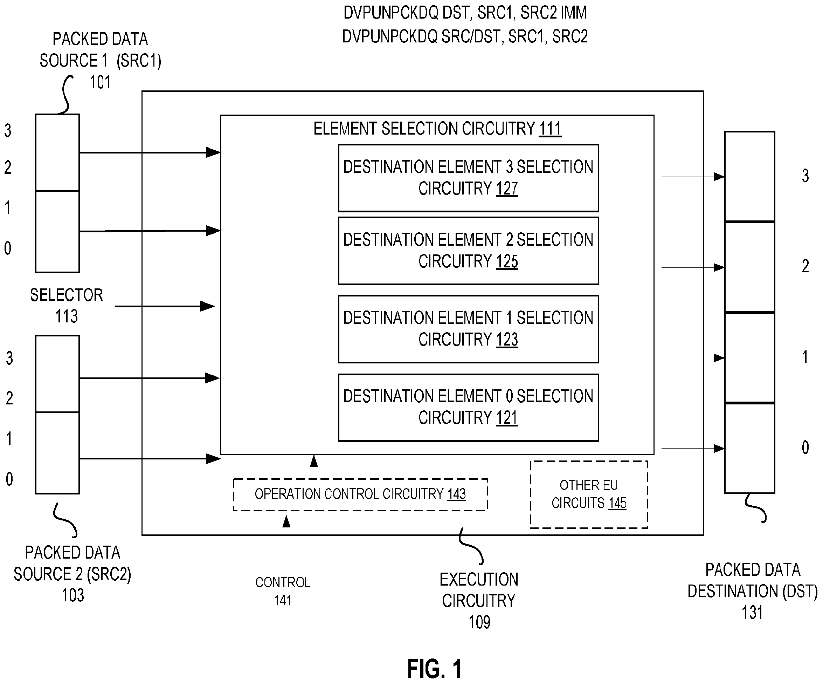

FIG. 1 illustrates an example execution of a single instruction to unpack doublewords (32-bit) from quadwords (64-bit) in each of two source registers based on selection information instruction (e.g., DVPUNPCKDQ). While this illustration is in little endian format, the principles discussed herein work in big endian format.

As shown, there are two packed data (e.g., vector or single instruction, multiple data (SIMD)) sources 101 and 103. These packed data sources have at least two quadwords. Each quadword can be thought of as including two doublewords. The doubleword locations are provided as 0-3 in the figure. In some examples, the packed data source 1 (SRC1) 101 and the packed data source 2 (SRC2) 103 are both vector or SIMD registers. In some examples, the packed data source 1 (SRC1) 101 is a vector or SIMD register and the packed data source 2 (SRC2) 103 is a memory location having vector or SIMD data.

The selector 113 is provided by the immediate (IMM) of the instruction in some examples. In some examples, the selector 113 is provided by one of the sources as detailed below. An example of encoding selector 113 is provided below:

| Bits or Data Element Position[7:0] encoding | | | | Destination Data | Description |
|---|---|---|---|---|---|
| [7:6] | [5:4] | [3:2] | [1:0] | | |
| 10 | 00 | 10 | 00 | {a3,a2,a1,a0} | interleave even dwords from SRC1, SRC2 |
| 11 | 01 | 11 | 01 | {b3,b2,b1,b0} | interleave odd dwords from SRC1, SRC2 |
| 00 | 10 | 00 | 10 | {a2,a1,a0,a3} | |
| 01 | 11 | 01 | 11 | {b2,b1,b0,b3} | |
| 11 | 00 | 11 | 00 | {b3,a2,b1,a0} | |
| 10 | 00 | 11 | 01 | {a3,a2,b1,b0} | |
| 11 | 01 | 10 | 00 | {b3,b2,a1,a0} | |

A packed data destination (DST) 131 is to store data elements selected by element selection circuitry 111 that is a part of execution circuitry 109. In some examples, the packed data destination (DST) 131 is a non-destructive destination. In some examples, packed data destination (DST) 131 is a non-destructive destination and is noted as SRC/DST as detailed below.

The element selection circuitry 111 comprises a plurality of destination element selection circuitries in some examples. For example, destination element 0 selection circuitry 121 selects, based on the selector 113, what of the two packed data sources 101 and 103 is to be stored in data element position 0 of DST 131; destination element 1 selection circuitry 123 selects, based on the selector 113, what of the two packed data sources 101 and 103 is to be stored in data element position 1 of DST 131; destination element 2 selection circuitry 125 selects, based on the selector 113, what of the two packed data sources 101 and 103 is to be stored in data element position 2 of DST 131; and destination element 3 selection circuitry 127 selects, based on the selector 113, what of the two packed data sources 101 and 103 is to be stored in data element position 3 of DST 131.

In some examples, a decoder and/or scheduler provides information (as control 141) to the execution circuitry 109 that allows for the proper execution unit type (e.g., integer adder) to be used. In some examples, operation control circuitry 143 configures the execution circuitry 109 according to that control information 141 to use one or more of the described components instead of other execution circuits 145 such as Boolean logic circuits, etc. In some examples, the operation control circuitry 143 is external to the execution circuitry 109 such as a part of a scheduler such as scheduler 1356. Note that the information may include information from the immediate of the instruction.

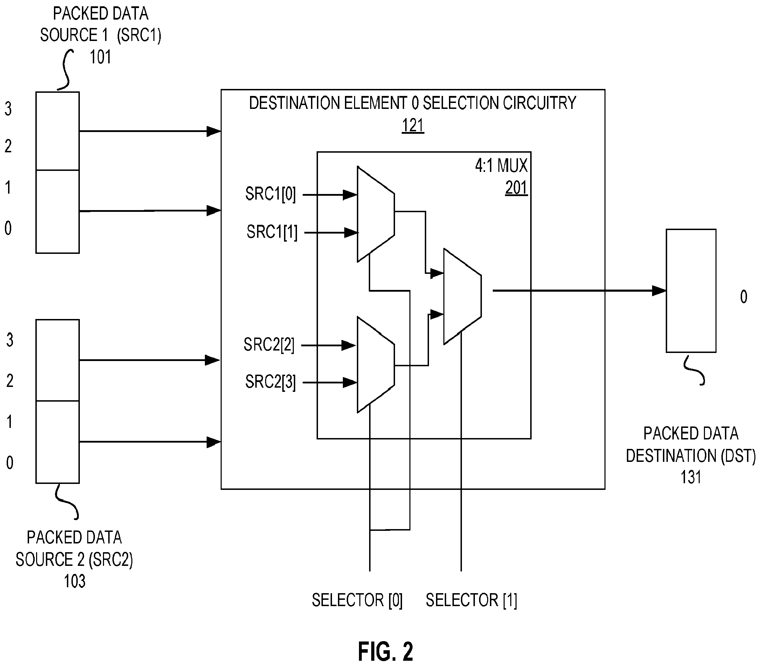

FIGS. 2-5 illustrate sub-portions of the element selection circuitry 111 according to some examples. In particular, each figures illustrates example mux circuitry that selects a particular data element from the packed data source 1 (SRC1) 101 or the packed data source 2 (SRC2) 103 of FIG. 1 according to particular bits of the selector 113.

FIG. 2 illustrates examples of destination element 0's selection circuitry 121. As shown, a 4:1 multiplexor (MUX) 201 is used to select a particular doubleword from the packed data source 1 (SRC1) 101 or the packed data source 2 (SRC2) 103 based on two bits from the selector such as two bit positions of selector 113. In this example, bits 0 and 1 of the selector are used according to:

```
                    SELECTOR[1:0]
                     2'b00: DEST[31:0] ← SRC1[31:0];
                     2'b01: DEST[31:0] ← SRC1[63:32];
                     2'b10: DEST[31:0] ← SRC2[95:64]; or
                     2'b11: DEST[31:0] ← SRC2[127:96].
```

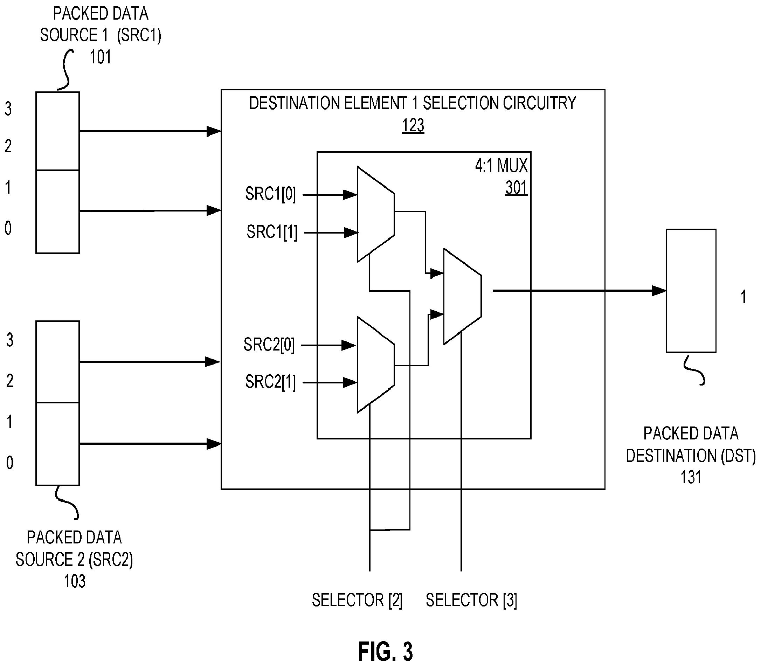

FIG. 3 illustrates examples of destination element 1's selection circuitry 123. As shown, a 4:1 multiplexor (MUX) 301 is used to select a particular doubleword from the packed data source 1 (SRC1) 101 or the packed data source 2 (SRC2) 103 based on two bits from the selector such as two bit positions of selector 113. In this example, bits 2 and 3 of the selector are used according to:

```
                    SELECTOR[3:2]
                     2'b00: DEST[63:32] ← SRC1[31:0];
                     2'b01: DEST[63:32] ← SRC1[63:32];
                     2'b10: DEST[63:32] ← SRC2[31:0]; or
                     2'b11: DEST[63:32] ← SRC2[63:32].
```

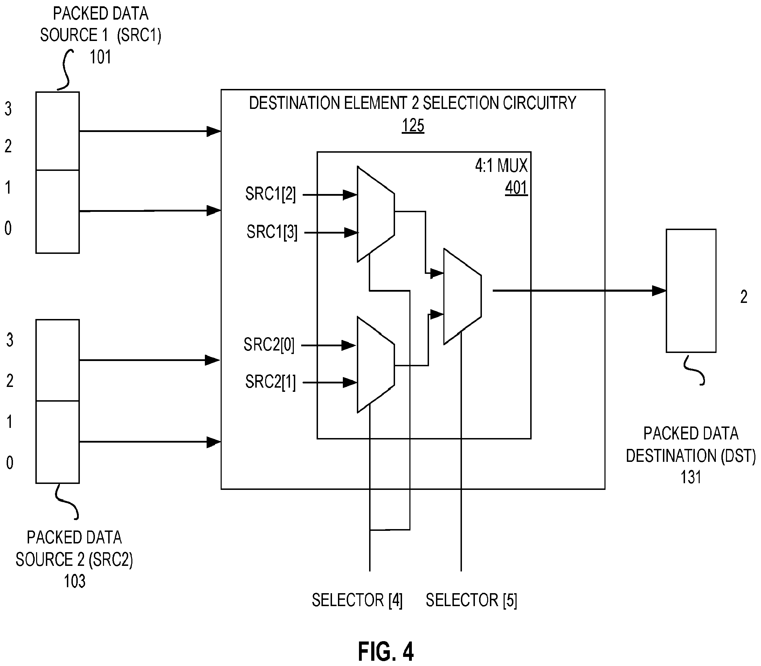

FIG. 4 illustrates examples of destination element 2's selection circuitry 125. As shown, a 4:1 multiplexor (MUX) 301 is used to select a particular doubleword from the packed data source 1 (SRC1) 101 or the packed data source 2 (SRC2) 103 based on two bits from the selector such as two bit positions of selector 113. In this example, bits 4 and 5 of the selector are used according to:

```
                    SELECTOR[5:4]
                     2'b00: DEST[95:64] ← SRC1[95:64];
                     2'b01: DEST[95:64] ← SRC1[127:96];
                     2'b10: DEST[95:64] ← SRC2[31:0]; and
                     2'b11: DEST[95:64] ← SRC2[63:32].
```

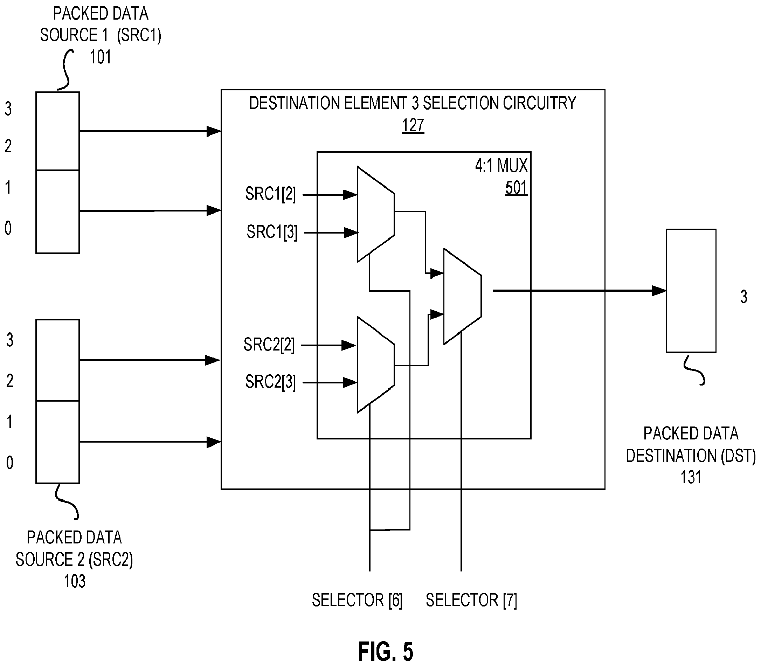

FIG. 5 illustrates examples of destination element 3's selection circuitry 127. As shown, a 4:1 multiplexor (MUX) 301 is used to select a particular doubleword from the packed data source 1 (SRC1) 101 or the packed data source 2 (SRC2) 103 based on two bits from the selector such as two bit positions of selector 113. In this example, bits 6 and 7 of the selector are used according to:

```
                    SELECTOR[7:6]
                     2'b00: DEST[127:96] ← SRC1[95:64];
                     2'b01: DEST[127:96] ← SRC1[127:96];
                     2'b10: DEST[127:96] ← SRC2[95:64]; and
                     2'b11: DEST[127:96] ← SRC2[127:96].
```

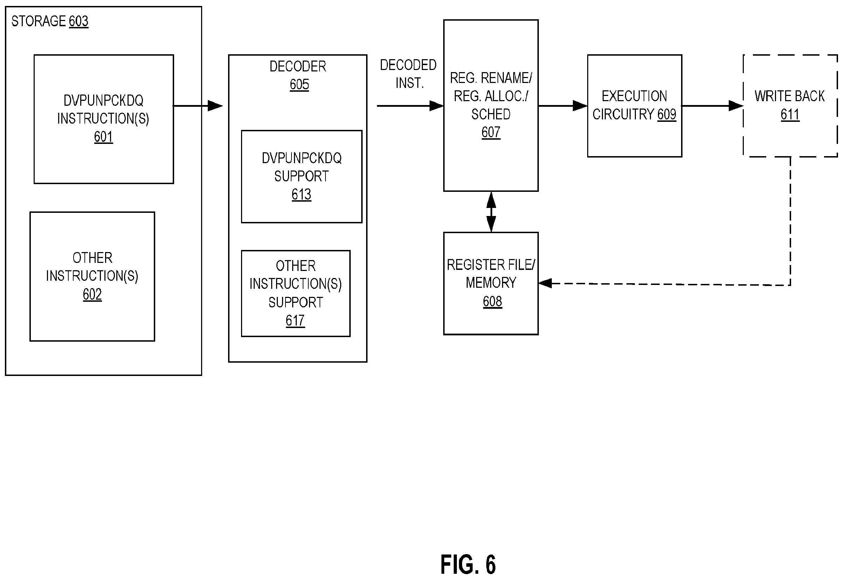

FIG. 6 illustrates examples of hardware to process an instance of a DVPUNPCKDQ instruction. In some examples, this illustrates at least a part of a DSP processor. In some examples, this illustrates at least a part of a processor core (CPU, GPU, and/or APU). As illustrated, storage 603 stores at least one instance of the DVPUNPCKDQ instruction 601 to be executed. The storage 603 may also store other instructions 602.

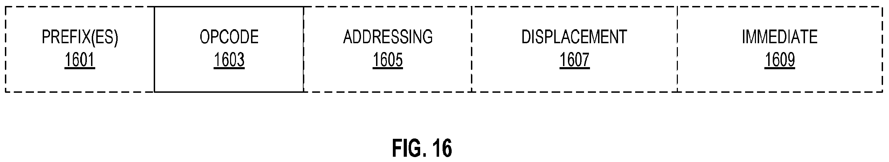

The instruction 601 is received by decoder circuitry 605 which includes DVPMASKLDDQU support 613 and other instruction(s) support 617. For example, the decoder circuitry 605 receives this instruction from fetch circuitry (not shown). For example, the decoder circuitry 605 receives this instruction from fetch circuitry (not shown). The instruction may be in any suitable format, such as that describe with reference to FIG. 16, etc. below.

An example of a format for an DVPUNPCKDQ instruction is DVPUNPCKDQ DST, SRC1, SRC2 IMM. In some examples, DVPUNPCKDQ is the opcode mnemonic of the instruction. In some examples, the opcode has a value of F30F3A. The opcode indicates execution circuitry is to unpack doublewords (32-bit) from quadwords (64-bit) in each of two source registers based on selection information. DST is a field for the destination operand identifier, such as packed data register or memory. SRC1 and SRC2 are fields for the source operands identifiers, such as packed data registers and/or memory. IMM is an immediate value. In some examples, the opcode is provided by at least field 1603, DST field is provided by field 1744, the first source is provided by bits VVVV of one of 2005, 2017, or 2117, the second source is provided by 1746, and the immediate is provided by 1609. In some examples, the opcode is provided by at least field 1603, DST field is provided by field 1744, the first source is provided by bits VVVV of one of 2005, 2017, or 2117, the second source is a memory location provided by 1746 and/or the SIB byte 1704, and the immediate is provided by 1609.

An example of a format for an DVPUNPCKDQ instruction is DVPUNPCKDQ DST/SRC, SRC1, SRC2. In some examples, DVPUNPCKDQ is the opcode mnemonic of the instruction. In some examples, the opcode has a value of F30F3A. The opcode indicates execution circuitry is to unpack doublewords (32-bit) from quadwords (64-bit) in each of two source registers based on selection information. SRC/DST is a field for a source/destination operand identifier, such as packed data register or memory that provides the selector as a source. SRC1 and SRC2 are fields for the source operands identifiers, such as packed data registers and/or memory. In some examples, the opcode is provided by at least field 1603, SRC/DST field is provided by field 1744, the first source is provided by bits VVVV of one of 2005, 2017, or 2117, the second source is provided by 1746. In some examples, the opcode is provided by at least field 1603, SRC/DST field is provided by field 1744, the first source is provided by bits VVVV of one of 2005, 2017, or 2117, and the second source is a register or memory location provided by 1746 and/or the SIB byte 1704.

An example of a format for an DVPUNPCKDQ instruction is DVPUNPCKDQ DST/SRC, SRC1, SRC2. In some examples, DVPUNPCKDQ is the opcode mnemonic of the instruction. In some examples, the opcode has a value of F30F3A. The opcode indicates execution circuitry is to unpack doublewords (32-bit) from quadwords (64-bit) in each of two source registers based on selection information. SRC/DST is a field for a source/destination operand identifier. SRC1 and SRC2 are fields for the source operands identifiers, such as packed data registers and/or memory wherein SRC1 provides the selector. In some examples, the opcode is provided by at least field 1603, SRC/DST field is provided by field 1744, the first source is provided by bits VVVV of one of 2005, 2017, or 2117, the second source is provided by 1746. In some examples, the opcode is provided by at least field 1603, SRC/DST field is provided by field 1744, the first source is provided by bits VVVV of one of 2005, 2017, or 2117, and the second source is a register or memory location provided by 1746 and/or the SIB byte 1704. Note for this example, SRC/DST is SRC1 101 and DST 131, and SRC2 is SRC2 103 of FIG. 1. The selector 113 is provided by bits VVVV of one of 2005, 2017, or 2117.

The decoder circuitry 605 decodes the instruction into one or more operations. In some examples, this decoding includes generating a plurality of micro-operations to be performed by execution circuitry (such as execution circuitry 609). The decoder circuitry 605 also decodes instruction prefixes which may be needed to provide one or the operands.

In some examples, register renaming, register allocation, and/or scheduling circuitry 607 provides functionality for one or more of: 1) renaming logical operand values to physical operand values (e.g., a register alias table in some examples), 2) allocating status bits and flags to the decoded instruction, and 3) scheduling the decoded instruction for execution by execution circuitry out of an instruction pool (e.g., using a reservation station in some examples).

Registers (register file) and/or memory 608 store data as operands of the instruction to be operated on by execution circuitry 609. Example register types include packed data registers (e.g., vector or SIMD), general purpose registers (GPRs), and floating-point registers.

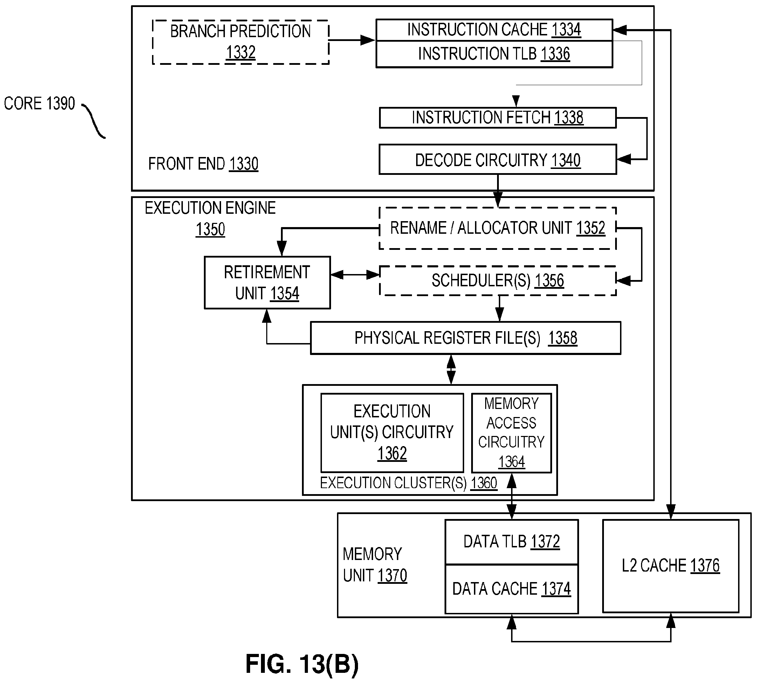

Execution circuitry 609 executes the decoded instruction. Example detailed execution circuitry includes execution circuitry 109 shown in FIG. 1, and execution cluster(s) 1360 shown in FIG. 13(B), etc. The execution of the decoded instruction causes the execution circuitry to unpack doublewords (32-bit) from quadwords (64-bit) in each of two source registers based on selection information.

In some examples, retirement/write back circuitry 611 architecturally commits the destination register into the registers or memory 608 and retires the instruction.

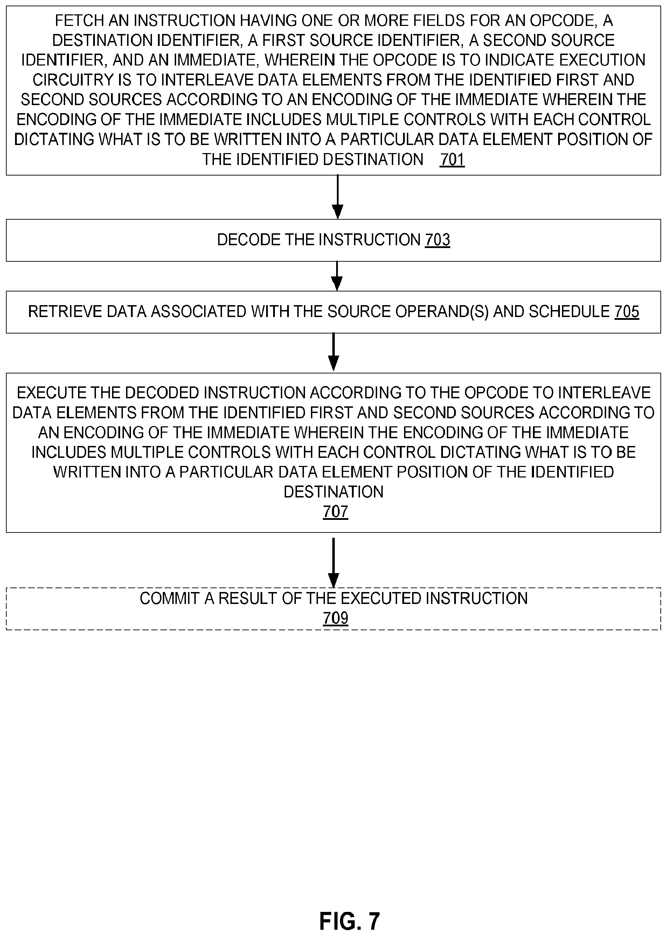

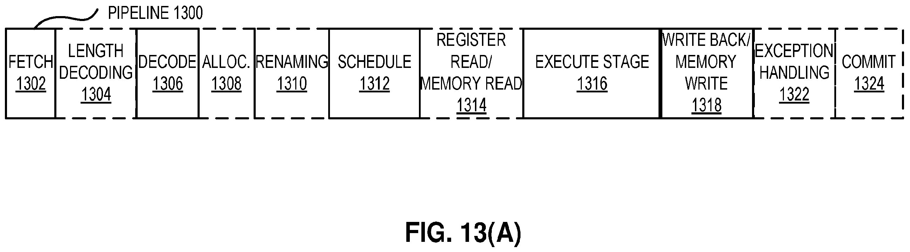

FIG. 7 illustrates an example of method performed by a processor to process a DVPUNPCKDQ instruction. For example, a processor core as shown in FIG. 13(B), a pipeline as detailed below, etc., performs this method.

At 701, an instance of single instruction is fetched. For example, an DVPUNPCKDQ is fetched. Examples of formats for the instruction have been detailed above. In this particular example, the instruction has fields for an opcode, a destination identifier, a first source identifier, a second source identifier, and an immediate, wherein the opcode is to indicate execution circuitry is to interleave data elements from the identified first and second sources according to an encoding of the immediate wherein the encoding of the immediate includes multiple controls with each control dictating what is to be written into a particular data element position of the identified destination.

The fetched instruction is decoded at 703. For example, the fetched DVPUNPCKDQ instruction is decoded by decoder circuitry such as decoder circuitry 605 or decode circuitry 1340 detailed herein.

Data values associated with the source operands of the decoded instruction are retrieved when the decoded instruction is scheduled at 705. For example, when one or more of the source operands are memory operands, the data from the indicated memory location is retrieved. In some examples, the decoded instruction (e.g., a micro-ops) is scheduled and the execution circuitry configured to execute the decoded instruction.

At 707, the decoded instruction is executed by execution circuitry (hardware) such as execution circuitry 109 shown in FIG. 1, execution circuitry 609 shown in FIG. 6, or execution cluster(s) 1360 shown in FIG. 13(B), etc. For the DVPUNPCKDQ instruction, the execution will cause execution circuitry to perform the operations described in connection with FIG. 1.

In some examples, the instruction is committed or retired at 709.

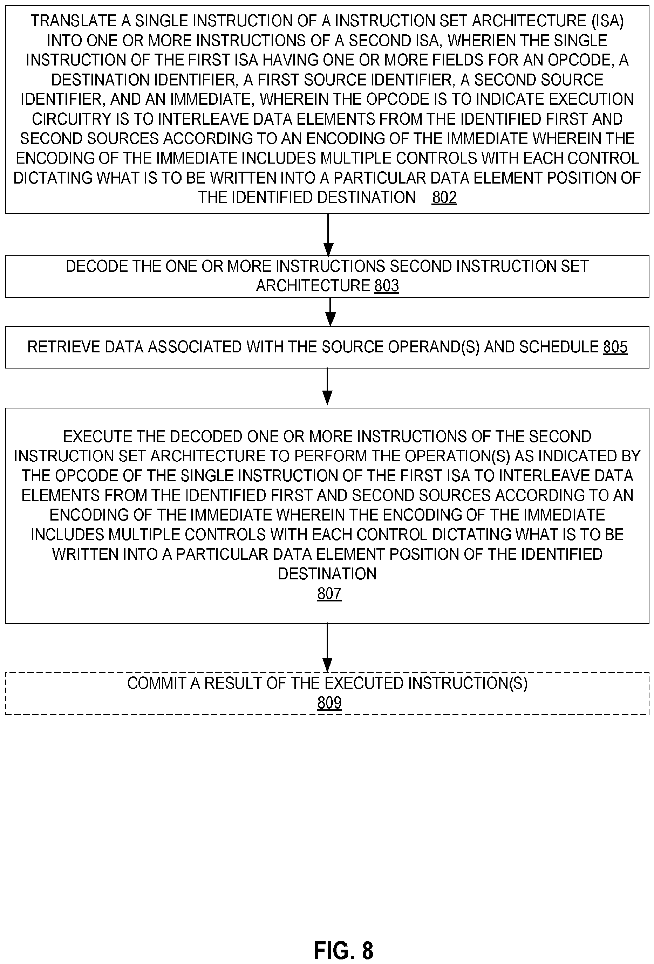

FIG. 8 illustrates an example of method to process a DVPUNPCKDQ instruction using emulation or binary translation. For example, a processor core as shown in FIG. 13(B), a pipeline and/or emulation/translation layer perform aspects of this method.

An instance of a single instruction of a first instruction set architecture is fetched at 801. The instance of the single instruction of the first instruction set architecture including fields for an opcode, a destination identifier, a first source identifier, a second source identifier, and an immediate, wherein the opcode is to indicate execution circuitry is to interleave data elements from the identified first and second sources according to an encoding of the immediate wherein the encoding of the immediate includes multiple controls with each control dictating what is to be written into a particular data element position of the identified destination.

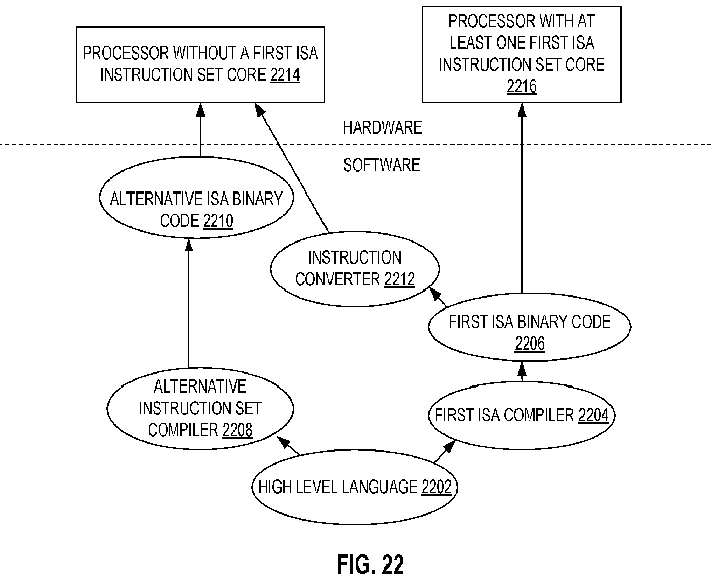

The fetched single instruction of the first instruction set architecture is translated into one or more instructions of a second instruction set architecture at 802. This translation is performed by a translation and/or emulation layer of software in some examples. In some examples, this translation is performed by an instruction converter 2212 as shown in FIG. 22. In some examples, the translation is performed by hardware translation circuitry.

The one or more translated instructions of the second instruction set architecture are decoded at 803. For example, the translated instructions are decoded by decoder circuitry such as decoder circuitry 605 or decode circuitry 1340 detailed herein. In some examples, the operations of translation and decoding at 802 and 803 are merged.

Data values associated with the source operand(s) of the decoded one or more instructions of the second instruction set architecture are retrieved and the one or more instructions are scheduled at 805. For example, when one or more of the source operands are memory operands, the data from the indicated memory location is retrieved. In some examples, the decoded instruction(s) (e.g., a micro-ops) is/are scheduled and the execution circuitry configured to execute the decoded instruction.

At 807, the decoded instruction(s) of the second instruction set architecture is/are executed by execution circuitry (hardware) such as execution circuitry 109 shown in FIG. 1, execution circuitry 609 shown in FIG. 6, or execution cluster(s) 1360 shown in FIG. 13(B) , etc. to perform the operation(s) indicated by the opcode of the single instruction of the first instruction set architecture.

In some examples, the instruction(s) is/are committed or retired at 809.

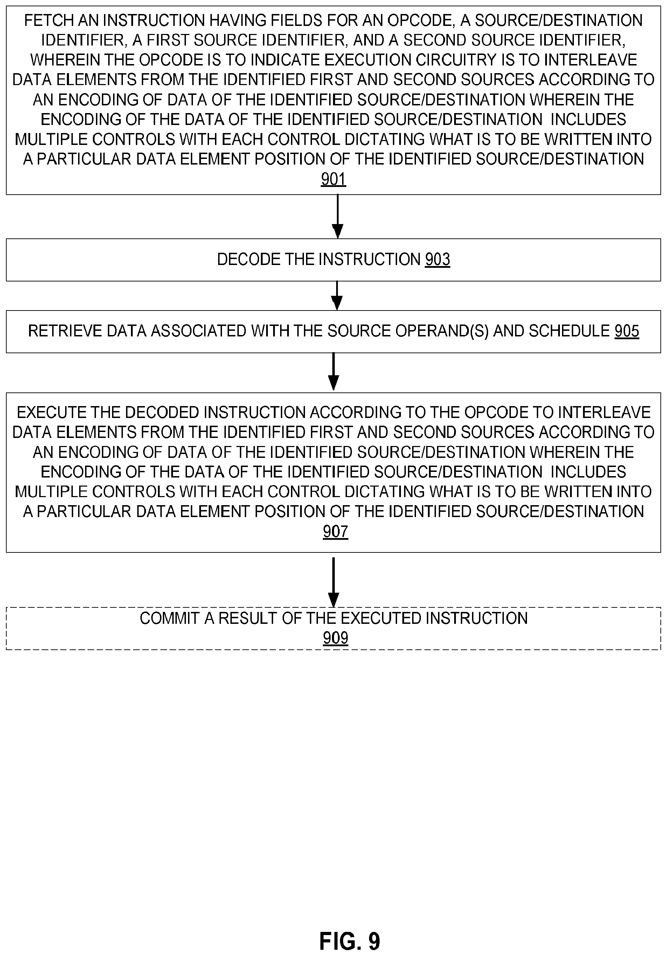

FIG. 9 illustrates an example of method performed by a processor to process a DVPUNPCKDQ instruction. For example, a processor core as shown in FIG. 13(B), a pipeline as detailed below, etc., performs this method.

At 901, an instance of single instruction is fetched. For example, an DVPUNPCKDQ is fetched. Examples of formats for the instruction have been detailed above. In this particular example, the instruction has fields for an opcode, a source/destination identifier, a first source identifier, and a second source identifier, wherein the opcode is to indicate execution circuitry is to interleave data elements from the identified first and second sources according to an encoding of data of the identified source/destination wherein the encoding of the data of the identified source/destination includes multiple controls with each control dictating what is to be written into a particular data element position of the identified source/destination.

The fetched instruction is decoded at 903. For example, the fetched DVPUNPCKDQ instruction is decoded by decoder circuitry such as decoder circuitry 605 or decode circuitry 1340 detailed herein.

Data values associated with the source operands of the decoded instruction are retrieved when the decoded instruction is scheduled at 905. For example, when one or more of the source operands are memory operands, the data from the indicated memory location is retrieved. In some examples, the decoded instruction (e.g., a micro-ops) is scheduled and the execution circuitry configured to execute the decoded instruction.

At 907, the decoded instruction is executed by execution circuitry (hardware) such as execution circuitry 109 shown in FIG. 1, execution circuitry 609 shown in FIG. 6, or execution cluster(s) 1360 shown in FIG. 13(B), etc. For the DVPUNPCKDQ instruction, the execution will cause execution circuitry to perform the operations described in connection with FIG. 1.

In some examples, the instruction is committed or retired at 909.

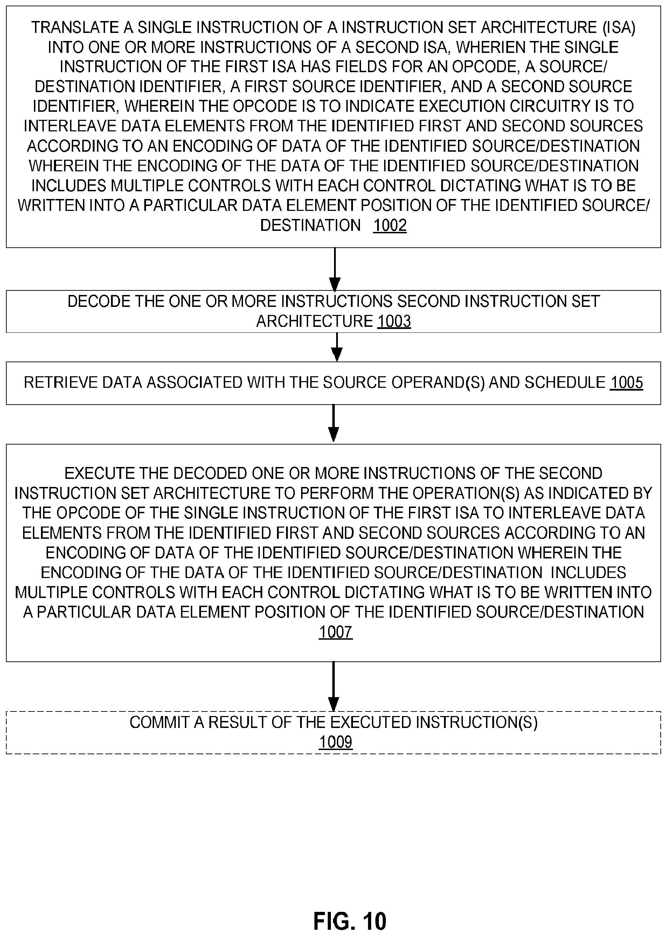

FIG. 10 illustrates an example of method to process a DVPUNPCKDQ instruction using emulation or binary translation. For example, a processor core as shown in FIG. 13(B), a pipeline and/or emulation/translation layer perform aspects of this method.

An instance of a single instruction of a first instruction set architecture is fetched at 1001. The instance of the single instruction of the first instruction set architecture including fields for an opcode, a source/destination identifier, a first source identifier, and a second source identifier, wherein the opcode is to indicate execution circuitry is to interleave data elements from the identified first and second sources according to an encoding of data of the identified source/destination wherein the encoding of the data of the identified source/destination includes multiple controls with each control dictating what is to be written into a particular data element position of the identified source/destination.

The fetched single instruction of the first instruction set architecture is translated into one or more instructions of a second instruction set architecture at 1002. This translation is performed by a translation and/or emulation layer of software in some examples. In some examples, this translation is performed by an instruction converter 2212 as shown in FIG. 22. In some examples, the translation is performed by hardware translation circuitry.

The one or more translated instructions of the second instruction set architecture are decoded at 1003. For example, the translated instructions are decoded by decoder circuitry such as decoder circuitry 605 or decode circuitry 1340 detailed herein. In some examples, the operations of translation and decoding at 1002 and 1003 are merged.

Data values associated with the source operand(s) of the decoded one or more instructions of the second instruction set architecture are retrieved and the one or more instructions are scheduled at 1005. For example, when one or more of the source operands are memory operands, the data from the indicated memory location is retrieved. In some examples, the decoded instruction(s) (e.g., a micro-ops) is/are scheduled and the execution circuitry configured to execute the decoded instruction.

At 1007, the decoded instruction(s) of the second instruction set architecture is/are executed by execution circuitry (hardware) such as execution circuitry 109 shown in FIG. 1, execution circuitry 609 shown in FIG. 6, or execution cluster(s) 1360 shown in FIG. 13(B) , etc. to perform the operation(s) indicated by the opcode of the single instruction of the first instruction set architecture.

In some examples, the instruction(s) is/are committed or retired at 1009.

Detailed below are example architectures, instruction formats, etc. that support the above described instructions.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

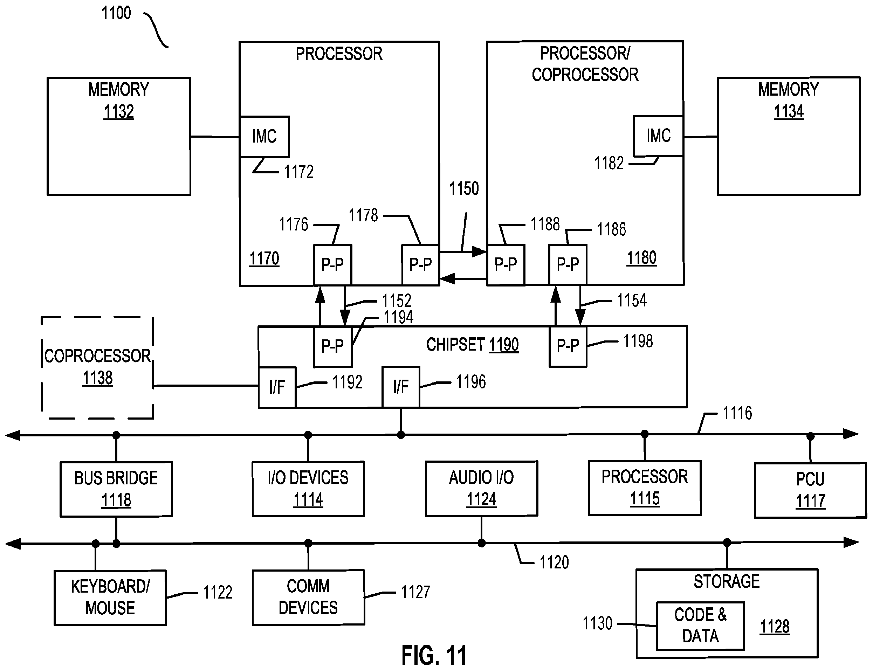

FIG. 11 illustrates an example computing system. Multiprocessor system 1100 is an interfaced system and includes a plurality of processors or cores including a first processor 1170 and a second processor 1180 coupled via an interface 1150 such as a point-to-point (P-P) interconnect, a fabric, and/or bus. In some examples, the first processor 1170 and the second processor 1180 are homogeneous. In some examples, first processor 1170 and the second processor 1180 are heterogenous. Though the example system 1100 is shown to have two processors, the system may have three or more processors, or may be a single processor system. In some examples, the computing system is a system on a chip (SoC).

Processors 1170 and 1180 are shown including integrated memory controller (IMC) circuitry 1172 and 1182, respectively. Processor 1170 also includes interface circuits 1176 and 1178; similarly, second processor 1180 includes interface circuits 1186 and 1188. Processors 1170, 1180 may exchange information via the interface 1150 using interface circuits 1178, 1188. IMCs 1172 and 1182 couple the processors 1170, 1180 to respective memories, namely a memory 1132 and a memory 1134, which may be portions of main memory locally attached to the respective processors.

Processors 1170, 1180 may each exchange information with a network interface (NW I/F) 1190 via individual interfaces 1152, 1154 using interface circuits 1176, 1194, 1186, 1198. The network interface 1190 (e.g., one or more of an interconnect, bus, and/or fabric, and in some examples is a chipset) may optionally exchange information with a coprocessor 1138 via an interface circuit 1192. In some examples, the coprocessor 1138 is a special-purpose processor, such as, for example, DSP processor, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1170, 1180 or outside of both processors, yet connected with the processors via an interface such as P-P interconnect, such that either or both processors' local cache information may be stored in the shared cache if a processor is placed into a low power mode.

Network interface 1190 may be coupled to a first interface 1116 via interface circuit 1196. In some examples, first interface 1116 may be an interface such as a Peripheral Component Interconnect (PCI) interconnect, a PCI Express interconnect or another I/O interconnect. In some examples, first interface 1116 is coupled to a power control unit (PCU) 1117, which may include circuitry, software, and/or firmware to perform power management operations with regard to the processors 1170, 1180 and/or co-processor 1138. PCU 1117 provides control information to a voltage regulator (not shown) to cause the voltage regulator to generate the appropriate regulated voltage. PCU 1117 also provides control information to control the operating voltage generated. In various examples, PCU 1117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1117 is illustrated as being present as logic separate from the processor 1170 and/or processor 1180. In other cases, PCU 1117 may execute on a given one or more of cores (not shown) of processor 1170 or 1180. In some cases, PCU 1117 may be implemented as a microcontroller (dedicated or general-purpose) or other control logic configured to execute its own dedicated power management code, sometimes referred to as P-code. In yet other examples, power management operations to be performed by PCU 1117 may be implemented externally to a processor, such as by way of a separate power management integrated circuit (PMIC) or another component external to the processor. In yet other examples, power management operations to be performed by PCU 1117 may be implemented within BIOS or other system software.

Various I/O devices 1114 may be coupled to first interface 1116, along with a bus bridge 1118 which couples first interface 1116 to a second interface 1120. In some examples, one or more additional processor(s) 1115, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1116. In some examples, second interface 1120 may be a low pin count (LPC) interface. Various devices may be coupled to second interface 1120 including, for example, a keyboard and/or mouse 1122, communication devices 1127 and storage circuitry 1128. Storage circuitry 1128 may be one or more non-transitory machine-readable storage media as described below, such as a disk drive or other mass storage device which may include instructions/code and data 1130 and may implement the storage 603 in some examples. Further, an audio I/O 1124 may be coupled to second interface 1120. Note that other architectures than the point-to-point architecture described above are possible. For example, instead of the point-to-point architecture, a system such as multiprocessor system 1100 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

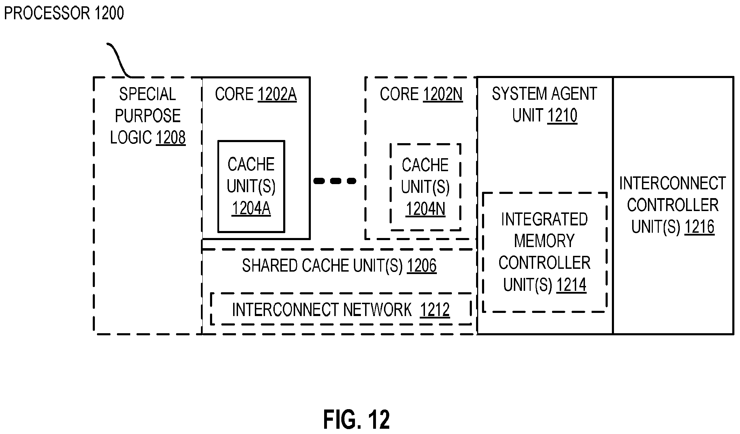

FIG. 12 illustrates a block diagram of an example processor and/or SoC 1200 that may have one or more cores and an integrated memory controller. The solid lined boxes illustrate a processor 1200 with a single core 1202(A), system agent unit circuitry 1210, and a set of one or more interface controller unit(s) circuitry 1216, while the optional addition of the dashed lined boxes illustrates an alternative processor 1200 with multiple cores 1202(A)-(N), a set of one or more integrated memory controller unit(s) circuitry 1214 in the system agent unit circuitry 1210, and special purpose logic 1208, as well as a set of one or more interface controller units circuitry 1216. Note that the processor 1200 may be one of the processors 1170 or 1180, or co-processor 1138 or 1115 of FIG. 11.

Thus, different implementations of the processor 1200 may include: 1) a CPU with the special purpose logic 1208 being integrated graphics and/or scientific (throughput) logic (which may include one or more cores, not shown), and the cores 1202(A)-(N) being one or more general purpose cores (e.g., general purpose in-order cores, general purpose out-of-order cores, or a combination of the two); 2) a coprocessor with the cores 1202(A)-(N) being a large number of special purpose cores intended primarily for graphics and/or scientific (throughput); and 3) a coprocessor with the cores 1202(A)-(N) being a large number of general purpose in-order cores. Thus, the processor 1200 may be a general-purpose processor, coprocessor or special-purpose processor, such as, for example, a network or communication processor, compression engine, DSP processor, graphics processor, GPGPU (general purpose graphics processing unit), a high throughput many integrated core (MIC) coprocessor (including 30 or more cores), embedded processor, or the like. The processor may be implemented on one or more chips. The processor 1200 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1204(A)-(N) within the cores 1202(A)-(N), a set of one or more shared cache unit(s) circuitry 1206, and external memory (not shown) coupled to the set of integrated memory controller unit(s) circuitry 1214. The set of one or more shared cache unit(s) circuitry 1206 may include one or more mid-level caches, such as level 2 (L2), level 3 (L3), level 4 (L4), or other levels of cache, such as a last level cache (LLC), and/or combinations thereof. While in some examples interface network circuitry 1212 (e.g., a ring interconnect) interfaces the special purpose logic 1208 (e.g., integrated graphics logic), the set of shared cache unit(s) circuitry 1206, and the system agent unit circuitry 1210, alternative examples use any number of well-known techniques for interfacing such units. In some examples, coherency is maintained between one or more of the shared cache unit(s) circuitry 1206 and cores 1202(A)-(N). In some examples, interface controller units circuitry 1216 couple the cores 1202 to one or more other devices 1218 such as one or more I/O devices, storage, one or more communication devices (e.g., wireless networking, wired networking, etc.), etc.

In some examples, one or more of the cores 1202(A)-(N) are capable of multi-threading. The system agent unit circuitry 1210 includes those components coordinating and operating cores 1202(A)-(N). The system agent unit circuitry 1210 may include, for example, power control unit (PCU) circuitry and/or display unit circuitry (not shown). The PCU may be or may include logic and components needed for regulating the power state of the cores 1202(A)-(N) and/or the special purpose logic 1208 (e.g., integrated graphics logic). The display unit circuitry is for driving one or more externally connected displays.

The cores 1202(A)-(N) may be homogenous in terms of instruction set architecture (ISA). Alternatively, the cores 1202(A)-(N) may be heterogeneous in terms of ISA; that is, a subset of the cores 1202(A)-(N) may be capable of executing an ISA, while other cores may be capable of executing only a subset of that ISA or another ISA.

### Example Core Architectures - In-order and out-of-order core block diagram.

FIG. 13(A) is a block diagram illustrating both an example in-order pipeline and an example register renaming, out-of-order issue/execution pipeline according to examples. FIG. 13(B) is a block diagram illustrating both an example in-order architecture core and an example register renaming, out-of-order issue/execution architecture core to be included in a processor according to examples. The solid lined boxes in FIGS. 13(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 13(A), a processor pipeline 1300 includes a fetch stage 1302, an optional length decoding stage 1304, a decode stage 1306, an optional allocation (Alloc) stage 1308, an optional renaming stage 1310, a schedule (also known as a dispatch or issue) stage 1312, an optional register read/memory read stage 1314, an execute stage 1316, a write back/memory write stage 1318, an optional exception handling stage 1322, and an optional commit stage 1324. One or more operations can be performed in each of these processor pipeline stages. For example, during the fetch stage 1302, one or more instructions are fetched from instruction memory, and during the decode stage 1306, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1306 and the register read/memory read stage 1314 may be combined into one pipeline stage. In one example, during the execute stage 1316, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 13(B) may implement the pipeline 1300 as follows: 1) the instruction fetch circuitry 1338 performs the fetch and length decoding stages 1302 and 1304; 2) the decode circuitry 1340 performs the decode stage 1306; 3) the rename/allocator unit circuitry 1352 performs the allocation stage 1308 and renaming stage 1310; 4) the scheduler(s) circuitry 1356 performs the schedule stage 1312; 5) the physical register file(s) circuitry 1358 and the memory unit circuitry 1370 perform the register read/memory read stage 1314; the execution cluster(s) 1360 perform the execute stage 1316; 6) the memory unit circuitry 1370 and the physical register file(s) circuitry 1358 perform the write back/memory write stage 1318; 7) various circuitry may be involved in the exception handling stage 1322; and 8) the retirement unit circuitry 1354 and the physical register file(s) circuitry 1358 perform the commit stage 1324.

FIG. 13(B) shows a processor core 1390 including front-end unit circuitry 1330 coupled to execution engine unit circuitry 1350, and both are coupled to memory unit circuitry 1370. The core 1390 may be a reduced instruction set architecture computing (RISC) core, a complex instruction set architecture computing (CISC) core, a very long instruction word (VLIW) core, or a hybrid or alternative core type. As yet another option, the core 1390 may be a special-purpose core, such as, for example, a network or communication core, compression engine, DSP core, coprocessor core, general purpose computing graphics processing unit (GPGPU) core, graphics core, or the like.

The front-end unit circuitry 1330 may include branch prediction circuitry 1332 coupled to instruction cache circuitry 1334, which is coupled to an instruction translation lookaside buffer (TLB) 1336, which is coupled to instruction fetch circuitry 1338, which is coupled to decode circuitry 1340. In one example, the instruction cache circuitry 1334 is included in the memory unit circuitry 1370 rather than the front-end circuitry 1330. The decode circuitry 1340 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1340 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1340 may be implemented using various different mechanisms. Examples of suitable mechanisms include, but are not limited to, look-up tables, hardware implementations, programmable logic arrays (PLAs), microcode read only memories (ROMs), etc. In one example, the core 1390 includes a microcode ROM (not shown) or other medium that stores microcode for certain macroinstructions (e.g., in decode circuitry 1340 or otherwise within the front-end circuitry 1330). In one example, the decode circuitry 1340 includes a micro-operation (micro-op) or operation cache (not shown) to hold/cache decoded operations, micro-tags, or micro-operations generated during the decode or other stages of the processor pipeline 1300. The decode circuitry 1340 may be coupled to rename/allocator unit circuitry 1352 in the execution engine circuitry 1350.

The execution engine circuitry 1350 includes the rename/allocator unit circuitry 1352 coupled to retirement unit circuitry 1354 and a set of one or more scheduler(s) circuitry 1356. The scheduler(s) circuitry 1356 represents any number of different schedulers, including reservations stations, central instruction window, etc. In some examples, the scheduler(s) circuitry 1356 can include arithmetic logic unit (ALU) scheduler/scheduling circuitry, ALU queues, address generation unit (AGU) scheduler/scheduling circuitry, AGU queues, etc. The scheduler(s) circuitry 1356 is coupled to the physical register file(s) circuitry 1358. Each of the physical register file(s) circuitry 1358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1358 includes vector registers unit circuitry, writemask registers unit circuitry, and scalar register unit circuitry. These register units may provide architectural vector registers, vector mask registers, general-purpose registers, etc. The physical register file(s) circuitry 1358 is coupled to the retirement unit circuitry 1354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1354 and the physical register file(s) circuitry 1358 are coupled to the execution cluster(s) 1360. The execution cluster(s) 1360 includes a set of one or more execution unit(s) circuitry 1362 and a set of one or more memory access circuitry 1364. The execution unit(s) circuitry 1362 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1356, physical register file(s) circuitry 1358, and execution cluster(s) 1360 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1364). It should also be understood that where separate pipelines are used, one or more of these pipelines may be out-of-order issue/execution and the rest in-order.

In some examples, the execution engine unit circuitry 1350 may perform load store unit (LSU) address/data pipelining to an Advanced Microcontroller Bus (AMB) interface (not shown), and address phase and writeback, data phase load, store, and branches.

The set of memory access circuitry 1364 is coupled to the memory unit circuitry 1370, which includes data TLB circuitry 1372 coupled to data cache circuitry 1374 coupled to level 2 (L2) cache circuitry 1376. In one example, the memory access circuitry 1364 may include load unit circuitry, store address unit circuitry, and store data unit circuitry, each of which is coupled to the data TLB circuitry 1372 in the memory unit circuitry 1370. The instruction cache circuitry 1334 is further coupled to the level 2 (L2) cache circuitry 1376 in the memory unit circuitry 1370. In one example, the instruction cache 1334 and the data cache 1374 are combined into a single instruction and data cache (not shown) in L2 cache circuitry 1376, level 3 (L3) cache circuitry (not shown), and/or main memory. The L2 cache circuitry 1376 is coupled to one or more other levels of cache and eventually to a main memory.

The core 1390 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1390 includes logic to support a packed data instruction set architecture extension (e.g., AVX1, AVX2), thereby allowing the operations used by many multimedia applications to be performed using packed data.

### Example Execution Unit(s) Circuitry.

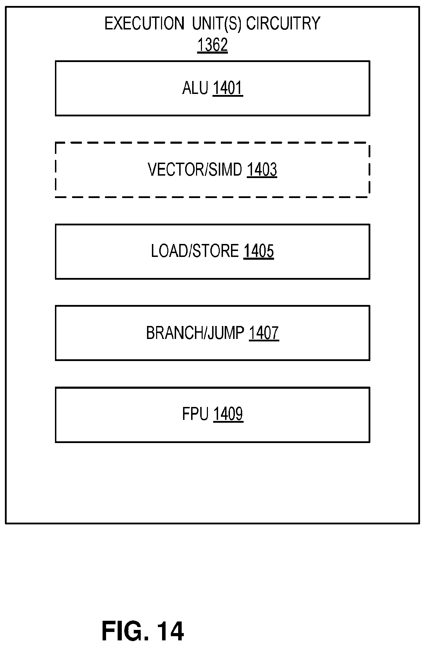

FIG. 14 illustrates examples of execution unit(s) circuitry, such as execution unit(s) circuitry 1362 of FIG. 13(B). As illustrated, execution unit(s) circuity 1362 may include one or more ALU circuits 1401, optional vector/single instruction multiple data (SIMD) circuits 1403, load/store circuits 1405, branch/jump circuits 1407, and/or Floating-point unit (FPU) circuits 1409. ALU circuits 1401 perform integer arithmetic and/or Boolean operations. Vector/SIMD circuits 1403 perform vector/SIMD operations on packed data (such as SIMD/vector registers). Load/store circuits 1405 execute load and store instructions to load data from memory into registers or store from registers to memory. Load/store circuits 1405 may also generate addresses. Branch/jump circuits 1407 cause a branch or jump to a memory address depending on the instruction. FPU circuits 1409 perform floating-point arithmetic. The width of the execution unit(s) circuitry 1362 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

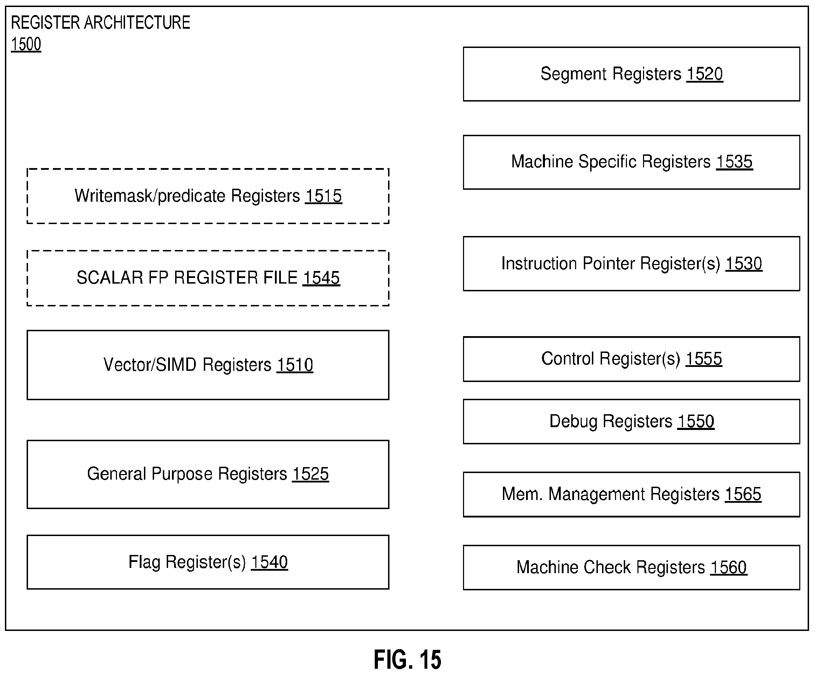

FIG. 15 is a block diagram of a register architecture 1500 according to some examples. As illustrated, the register architecture 1500 includes vector/SIMD registers 1510 that vary from 128-bit to 1,024 bits width. In some examples, the vector/SIMD registers 1510 are physically 512-bits and, depending upon the mapping, only some of the lower bits are used. For example, in some examples, the vector/SIMD registers 1510 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1500 includes writemask/predicate registers 1515. For example, in some examples, there are 8 writemask/predicate registers (sometimes called k0 through k7) that are each 16-bit, 32-bit, 64-bit, or 128-bit in size. Writemask/predicate registers 1515 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1515 corresponds to a data element position of the destination. In other examples, the writemask/predicate registers 1515 are scalable and consists of a set number of enable bits for a given vector element (e.g., 8 enable bits per 64-bit vector element).

The register architecture 1500 includes a plurality of general-purpose registers 1525. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1500 includes scalar floating-point (FP) register file 1545 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1540 (e.g., EFLAGS, RFLAGS, etc.) store status and control information for arithmetic, compare, and system operations. For example, the one or more flag registers 1540 may store condition code information such as carry, parity, auxiliary carry, zero, sign, and overflow. In some examples, the one or more flag registers 1540 are called program status and control registers.

Segment registers 1520 contain segment points for use in accessing memory. In some examples, these registers are referenced by the names CS, DS, SS, ES, FS, and GS.

Model specific registers or machine specific registers (MSRs) 1535 control and report on processor performance. Most MSRs 1535 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1560 consist of control, status, and error reporting MSRs that are used to detect and report on hardware errors. Control register(s) 1555 (e.g., CR0-CR4) determine the operating mode of a processor (e.g., processor 1170, 1180, 1138, 1115, and/or 1200) and the characteristics of a currently executing task. In some examples, MSRs 1535 are a subset of control registers 1555.

One or more instruction pointer register(s) 1530 store an instruction pointer value. Debug registers 1550 control and allow for the monitoring of a processor or core's debugging operations.

Memory (mem) management registers 1565 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1500 may, for example, be used in register file / memory 608, or physical register file(s) circuitry 1358.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of ×86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

FIG. 16 illustrates examples of an instruction format. As illustrated, an instruction may include multiple components including, but not limited to, one or more fields for: one or more prefixes 1601, an opcode 1603, addressing information 1605 (e.g., register identifiers, memory addressing information, etc.), a displacement value 1607, and/or an immediate value 1609. Note that some instructions utilize some or all the fields of the format whereas others may only use the field for the opcode 1603. In some examples, the order illustrated is the order in which these fields are to be encoded, however, it should be appreciated that in other examples these fields may be encoded in a different order, combined, etc.

The prefix(es) field(s) 1601, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1603 is used to at least partially define the operation to be performed upon a decoding of the instruction. In some examples, a primary opcode encoded in the opcode field 1603 is one, two, or three bytes in length. In other examples, a primary opcode can be a different length. An additional 3-bit opcode field is sometimes encoded in another field.

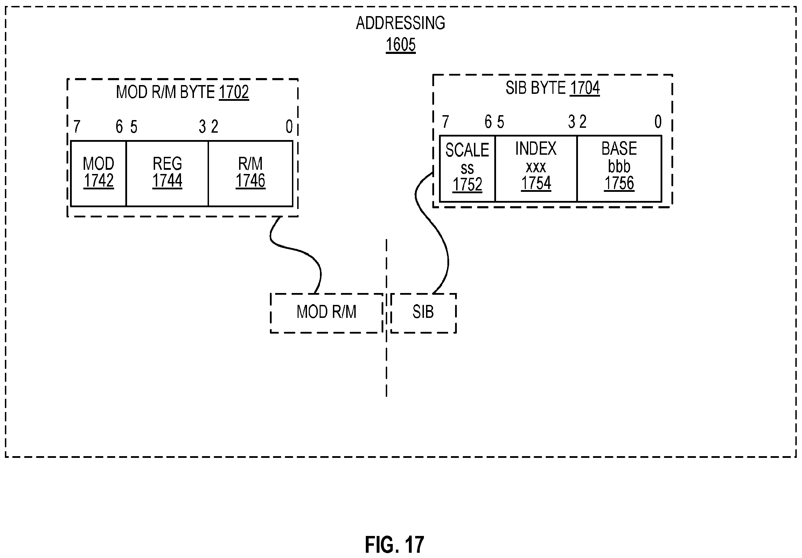

The addressing information field 1605 is used to address one or more operands of the instruction, such as a location in memory or one or more registers. FIG. 17 illustrates examples of the addressing information field 1605. In this illustration, an optional MOD R/M byte 1702 and an optional Scale, Index, Base (SIB) byte 1704 are shown. The MOD R/M byte 1702 and the SIB byte 1704 are used to encode up to two operands of an instruction, each of which is a direct register or effective memory address. Note that both of these fields are optional in that not all instructions include one or more of these fields. The MOD R/M byte 1702 includes a MOD field 1742, a register (reg) field 1744, and R/M field 1746.

The content of the MOD field 1742 distinguishes between memory access and non-memory access modes. In some examples, when the MOD field 1742 has a binary value of 11 (11b), a register-direct addressing mode is utilized, and otherwise a register-indirect addressing mode is used.

The register field 1744 may encode either the destination register operand or a source register operand or may encode an opcode extension and not be used to encode any instruction operand. The content of register field 1744, directly or through address generation, specifies the locations of a source or destination operand (either in a register or in memory). In some examples, the register field 1744 is supplemented with an additional bit from a prefix (e.g., prefix 1601) to allow for greater addressing.

The R/M field 1746 may be used to encode an instruction operand that references a memory address or may be used to encode either the destination register operand or a source register operand. Note the R/M field 1746 may be combined with the MOD field 1742 to dictate an addressing mode in some examples.

The SIB byte 1704 includes a scale field 1752, an index field 1754, and a base field 1756 to be used in the generation of an address. The scale field 1752 indicates a scaling factor. The index field 1754 specifies an index register to use. In some examples, the index field 1754 is supplemented with an additional bit from a prefix (e.g., prefix 1601) to allow for greater addressing. The base field 1756 specifies a base register to use. In some examples, the base field 1756 is supplemented with an additional bit from a prefix (e.g., prefix 1601) to allow for greater addressing. In practice, the content of the scale field 1752 allows for the scaling of the content of the index field 1754 for memory address generation (e.g., for address generation that uses 2^{scale ∗} index + base).

Some addressing forms utilize a displacement value to generate a memory address. For example, a memory address may be generated according to 2^{scale ∗} index + base + displacement, index^{∗}scale + displacement, r/m + displacement, instruction pointer (RIP/EIP) + displacement, register + displacement, etc. The displacement may be a 1-byte, 2-byte, 4-byte, etc. value. In some examples, the displacement field 1607 provides this value. Additionally, in some examples, a displacement factor usage is encoded in the MOD field of the addressing information field 1605 that indicates a compressed displacement scheme for which a displacement value is calculated and stored in the displacement field 1607.

In some examples, the immediate value field 1609 specifies an immediate value for the instruction. An immediate value may be encoded as a 1-byte value, a 2-byte value, a 4-byte value, etc.

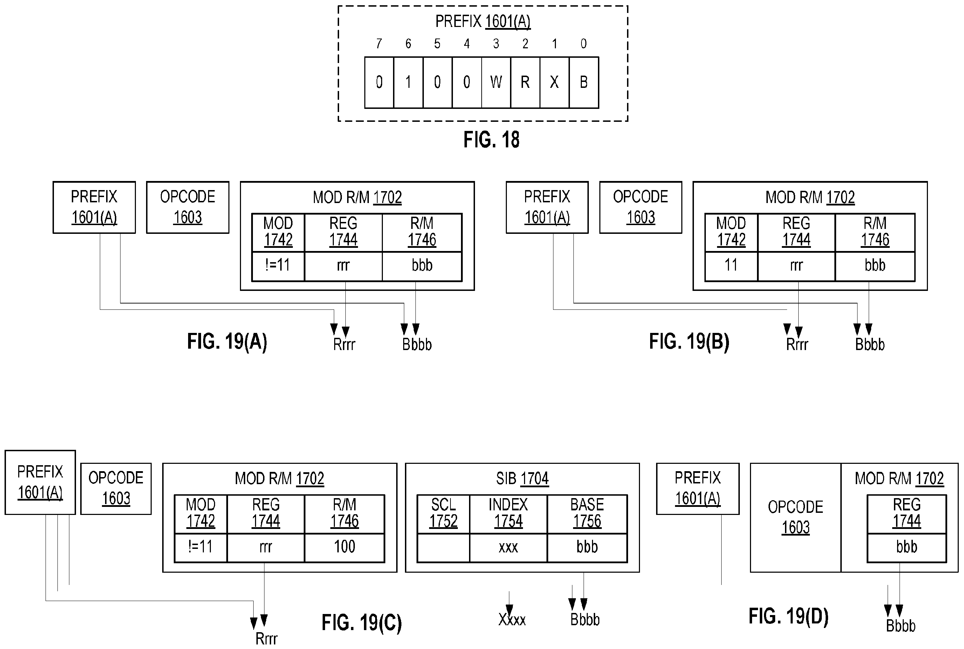

FIG. 18 illustrates examples of a first prefix 1601(A). In some examples, the first prefix 1601(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1601(A) may specify up to three registers using 3-bit fields depending on the format: 1) using the reg field 1744 and the R/M field 1746 of the MOD R/M byte 1702; 2) using the MOD R/M byte 1702 with the SIB byte 1704 including using the reg field 1744 and the base field 1756 and index field 1754; or 3) using the register field of an opcode.

In the first prefix 1601(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1744 and MOD R/M R/M field 1746 alone can each only address 8 registers.

In the first prefix 1601(A), bit position 2 (R) may be an extension of the MOD R/M reg field 1744 and may be used to modify the MOD R/M reg field 1744 when that field encodes a general-purpose register, a 64-bit packed data register (e.g., a SSE register), or a control or debug register. R is ignored when MOD R/M byte 1702 specifies other registers or defines an extended opcode.

Bit position 1 (X) may modify the SIB byte index field 1754.

Bit position 0 (B) may modify the base in the MOD R/M R/M field 1746 or the SIB byte base field 1756; or it may modify the opcode register field used for accessing general purpose registers (e.g., general purpose registers 1525).

FIGS. 19(A)-(D) illustrate examples of how the R, X, and B fields of the first prefix 1601(A) are used. FIG. 19(A) illustrates R and B from the first prefix 1601(A) being used to extend the reg field 1744 and R/M field 1746 of the MOD R/M byte 1702 when the SIB byte 17 04 is not used for memory addressing. FIG. 19(B) illustrates R and B from the first prefix 1601(A) being used to extend the reg field 1744 and R/M field 1746 of the MOD R/M byte 1702 when the SIB byte 17 04 is not used (register-register addressing). FIG. 19(C) illustrates R, X, and B from the first prefix 1601(A) being used to extend the reg field 1744 of the MOD R/M byte 1702 and the index field 1754 and base field 1756 when the SIB byte 1704 being used for memory addressing. FIG. 19(D) illustrates B from the first prefix 1601(A) being used to extend the reg field 1744 of the MOD R/M byte 1702 when a register is encoded in the opcode 1603.

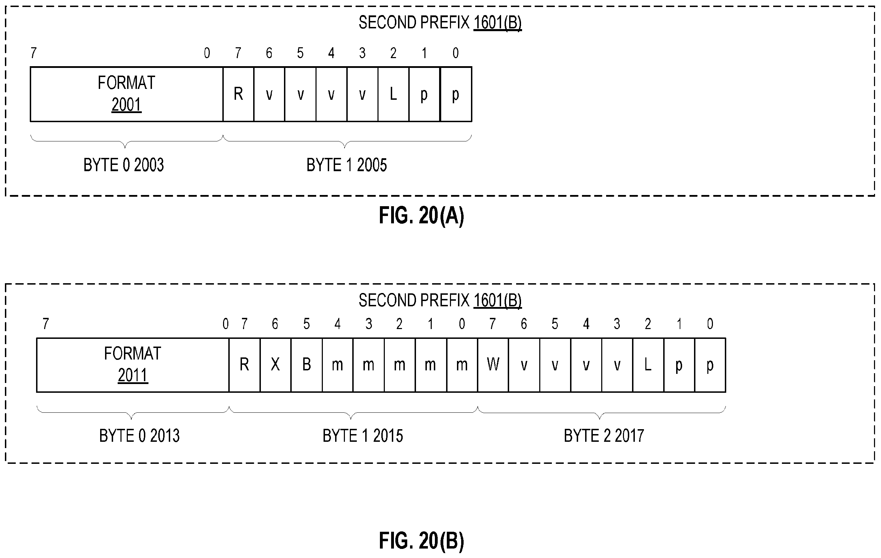

FIGS. 20(A)-(B) illustrate examples of a second prefix 1601(B). In some examples, the second prefix 1601(B) is an example of a VEX prefix. The second prefix 1601(B) encoding allows instructions to have more than two operands, and allows SIMD vector registers (e.g., vector/SIMD registers 1510) to be longer than 64-bits (e.g., 128-bit and 256-bit). The use of the second prefix 1601(B) provides for three-operand (or more) syntax. For example, previous two-operand instructions performed operations such as A = A + B, which overwrites a source operand. The use of the second prefix 1601(B) enables operands to perform nondestructive operations such as A = B + C.

In some examples, the second prefix 1601(B) comes in two forms - a two-byte form and a three-byte form. The two-byte second prefix 1601(B) is used mainly for 128-bit, scalar, and some 256-bit instructions; while the three-byte second prefix 1601(B) provides a compact replacement of the first prefix 1601(A) and 3-byte opcode instructions.

FIG. 20(A) illustrates examples of a two-byte form of the second prefix 1601(B). In one example, a format field 2001 (byte 0 2003) contains the value C5H. In one example, byte 1 2005 includes an "R" value in bit[7]. This value is the complement of the "R" value of the first prefix 1601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1746 to encode the instruction operand that references a memory address or encode either the destination register operand or a source register operand.

Instructions that use this prefix may use the MOD R/M reg field 1744 to encode either the destination register operand or a source register operand, or to be treated as an opcode extension and not used to encode any instruction operand.

For instruction syntax that support four operands, vvvv, the MOD R/M R/M field 1746 and the MOD R/M reg field 1744 encode three of the four operands. Bits[7:4] of the immediate value field 1609 are then used to encode the third source register operand.

FIG. 20(B) illustrates examples of a three-byte form of the second prefix 1601(B). In one example, a format field 2011 (byte 0 2013) contains the value C4H. Byte 1 2015 includes in bits[7:5] "R," "X," and "B" which are the complements of the same values of the first prefix 1601(A). Bits[4:0] of byte 1 2015 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2017 is used similar to W of the first prefix 1601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1746 to encode the instruction operand that references a memory address or encode either the destination register operand or a source register operand.

Instructions that use this prefix may use the MOD R/M reg field 1744 to encode either the destination register operand or a source register operand, or to be treated as an opcode extension and not used to encode any instruction operand.

For instruction syntax that support four operands, vvvv, the MOD R/M R/M field 1746, and the MOD R/M reg field 1744 encode three of the four operands. Bits[7:4] of the immediate value field 1609 are then used to encode the third source register operand.

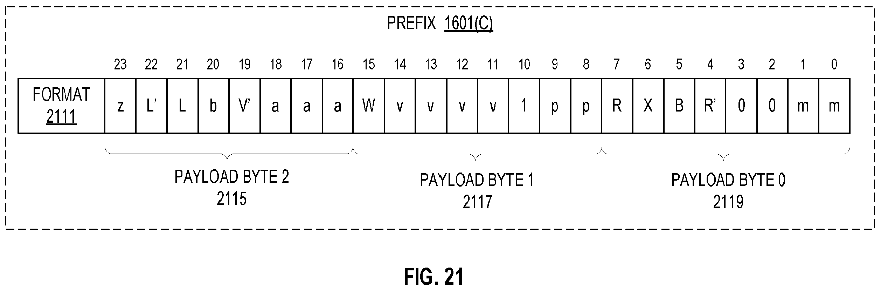

FIG. 21 illustrates examples of a third prefix 1601(C). In some examples, the third prefix 1601(C) is an example of an EVEX prefix. The third prefix 1601(C) is a four-byte prefix.

The third prefix 1601(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 15) or predication utilize this prefix. Opmask register allow for conditional processing or selection control. Opmask instructions, whose source/destination operands are opmask registers and treat the content of an opmask register as a single value, are encoded using the second prefix 1601(B).

The third prefix 1601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1601(C) is a format field 2111 that has a value, in one example, of 62H. Subsequent bytes are referred to as payload bytes 2115-2119 and collectively form a 24-bit value of P[23:0] providing specific capability in the form of one or more fields (detailed herein).

In some examples, P[1:0] of payload byte 2119 are identical to the low two mm bits. P[3:2] are reserved in some examples. Bit P[4] (R') allows access to the high 16 vector register set when combined with P[7] and the MOD R/M reg field 1744. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1744 and MOD R/M R/M field 1746. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1601(A) and second prefix 1611(B) and may serve as an opcode extension bit or operand size promotion.

P[18:16] specify the index of a register in the opmask (writemask) registers (e.g., writemask/predicate registers 1515). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Examples of encoding of registers in instructions using the third prefix 1601(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 22 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 22 shows a program in a high-level language 2202 may be compiled using a first ISA compiler 2204 to generate first ISA binary code 2206 that may be natively executed by a processor with at least one first ISA core 2216. The processor with at least one first ISA core 2216 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2204 represents a compiler that is operable to generate first ISA binary code 2206 (e.g., object code) that can, with or without additional linkage processing, be executed on the processor with at least one first ISA core 2216. Similarly, FIG. 22 shows the program in the high-level language 2202 may be compiled using an alternative ISA compiler 2208 to generate alternative ISA binary code 2210 that may be natively executed by a processor without a first ISA core 2214. The instruction converter 2212 is used to convert the first ISA binary code 2206 into code that may be natively executed by the processor without a first ISA core 2214. This converted code is not necessarily to be the same as the alternative ISA binary code 2210; however, the converted code will accomplish the general operation and be made up of instructions from the alternative ISA. Thus, the instruction converter 2212 represents software, firmware, hardware, or a combination thereof that, through emulation, simulation or any other process, allows a processor or other electronic device that does not have a first ISA processor or core to execute the first ISA binary code 2206.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

Examples include, but are not limited to:
1. An apparatus comprising:
   decoder circuitry to decode an instance of a single instruction, the single instruction to include one or more fields for an opcode, a destination operand identifier, a first source operand identifier, a second source operand identifier, and an immediate, wherein the opcode is to indicate execution circuitry is to interleave data elements from the identified first and second source operands according to an encoding of the immediate wherein the encoding of the immediate to include multiple controls with each control dictating what is to be written into a particular data element position of the identified destination operand;
   execution circuitry to execute the decoded instruction according to the opcode.
2. The apparatus of example 1, wherein the field for the identifier of the first source operand is to identify a vector register.
3. The apparatus of example 1, wherein the field for the identifier of the first source operand is to identify a memory location.
4. The apparatus of any of examples 1-3, wherein two bits of the immediate are to be used as element selectors for a 4:1 multiplexer.
5. The apparatus of any of examples 1-4, wherein the data elements to interleave of the identified first and second source operands are 32-bit in size.
6. The apparatus of any of examples 1-5, wherein the data elements of the identified first and second source operands are 64-bit in size.
7. The apparatus of any of examples 1-6, wherein the apparatus is a digital signal processing core.
8. A method comprising:
   translating an instance of a single instruction of a first instruction set architecture to one or more instructions of a second instruction set architecture, the instance of the single instruction to include one or more fields for an opcode, a destination operand identifier, a first source operand identifier, a second source operand identifier, and an immediate, wherein the opcode is to indicate execution circuitry is to interleave data elements from the identified first and second source operands according to an encoding of the immediate wherein the encoding of the immediate to include multiple controls with each control dictating what is to be written into a particular data element position of the identified destination operand;
   decoding the one or more instructions of a second instruction set architecture; and
   executing the decoded instruction according to the opcode of the instance of the single instruction of the first instruction set architecture.
9. The method of example 8, wherein the field for the identifier of the first source operand is to identify a vector register.
10. The method of example 8, wherein the field for the identifier of the first source operand is to identify a memory location.
11. The method of any of examples 8-10, wherein two bits of the immediate are to be used as element selectors for a 4:1 multiplexer.
12. The method of any of examples 8-11, wherein the data elements to interleave of the identified first and second source operands are 32-bit in size.
13. The method of any of examples 8-11, wherein the data elements of the identified first and second source operands are 64-bit in size.
14. The method of any of examples 8-13, wherein the apparatus is a digital signal processing core.
15. A system comprising:
   a general purpose processor core; and
   a digital signal processing core coupled to the general purpose processor core, the digital signal processing core including:
      decoder circuitry to decode an instance of a single instruction, the single instruction to include one or more fields for an opcode, a destination operand identifier, a first source operand identifier, a second source operand identifier, and an immediate, wherein the opcode is to indicate execution circuitry is to interleave data elements from the identified first and second source operands according to an encoding of the immediate wherein the encoding of the immediate to include multiple controls with each control dictating what is to be written into a particular data element position of the identified destination operand;
      execution circuitry to execute the decoded instruction according to the opcode.
16. The system of example 15, wherein the field for the identifier of the first source operand is to identify a vector register.
17. The system of example 15, wherein the field for the identifier of the first source operand is to identify a memory location.
18. The system of any of examples 15-17, wherein two bits of the immediate are to be used as element selectors for a 4:1 multiplexer.
19. The system of any of examples 15-18, wherein the data elements to interleave of the identified first and second source operands are 32-bit in size.
20. The system of any of examples 15-18, wherein the data elements of the identified first and second source operands are 64-bit in size.
21. The system of any of examples 15-20, wherein the apparatus is a digital signal processing core.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
decoder circuitry to decode an instance of a single instruction, the single instruction to include one or more fields for an opcode, a destination operand identifier, a first source operand identifier, a second source operand identifier, and an immediate, wherein the opcode is to indicate execution circuitry is to interleave data elements from the identified first and second source operands according to an encoding of the immediate wherein the encoding of the immediate to include multiple controls with each control dictating what is to be written into a particular data element position of the identified destination operand;
execution circuitry to execute the decoded instruction according to the opcode.

2. The apparatus of claim 1, wherein the field for the identifier of the first source operand is to identify a vector register.

3. The apparatus of claim 1, wherein the field for the identifier of the first source operand is to identify a memory location.

4. The apparatus of any of claims 1-3, wherein two bits of the immediate are to be used as element selectors for a 4:1 multiplexer.

5. The apparatus of any of claims 1-4, wherein the data elements to interleave of the identified first and second source operands are 32-bit in size.

6. The apparatus of any of claims 1-4, wherein the data elements of the identified first and second source operands are 64-bit in size.

7. The apparatus of any of claims 1-6, wherein the apparatus is a digital signal processing core.

8. A method comprising:
translating an instance of a single instruction of a first instruction set architecture to one or more instructions of a second instruction set architecture, the instance of the single instruction to include one or more fields for an opcode, a destination operand identifier, a first source operand identifier, a second source operand identifier, and an immediate, wherein the opcode is to indicate execution circuitry is to interleave data elements from the identified first and second source operands according to an encoding of the immediate wherein the encoding of the immediate to include multiple controls with each control dictating what is to be written into a particular data element position of the identified destination operand;
decoding the one or more instructions of a second instruction set architecture; and
executing the decoded instruction according to the opcode of the instance of the single instruction of the first instruction set architecture.

9. The method of claim 8, wherein the field for the identifier of the first source operand is to identify a vector register.

10. The method of claim 8, wherein the field for the identifier of the first source operand is to identify a memory location.

11. The method of any of claims 8-10, wherein two bits of the immediate are to be used as element selectors for a 4:1 multiplexer.

12. The method of any of claims 8-11, wherein the data elements to interleave of the identified first and second source operands are 32-bit in size.

13. The method of any of claims 8-11, wherein the data elements of the identified first and second source operands are 64-bit in size.

14. The method of any of claims 8-13, wherein the executing is performed by a digital signal processing core.
